# EUROPÄISCHE PATENTSCHRIFT

(11) **EP 2 921 041 B1**
(45) Veröffentlichungstag und Bekanntmachung des Hinweises auf die Patenterteilung: **11.04.2018**
(21) Anmeldenummer: 14198395.7
(22) Anmeldetag: 17.12.2014
(51) Int. Cl.: A01D 34/30, A01D 41/14

(54) **Schneidwerk für eine Erntemaschine**
Cutting assembly for an agricultural harvester
Barre de coupe pour une moissonneuse

(30) Priorität: 19.03.2014 DE 102014003880
(43) Veröffentlichungstag der Anmeldung: 23.09.2015
(73) Patentinhaber: CLAAS Selbstfahrende Erntemaschinen GmbH, 33428 Harsewinkel (DE)
(72) Erfinder: Flöthmann, Sebastian, 33334 Gütersloh (DE)

(56) Entgegenhaltungen:
- DE-A1-102010 011 123
- GB-A- 1 469 633
- US-A- 1 510 943
- US-A- 2 731 256
- US-A1- 2007 144 280

## Beschreibung

Die vorliegende Erfindung betrifft ein Schneidwerk für eine Erntemaschine zum Ernten von halmartigem Erntegut, wie etwa für einen Mähdrescher.

Ein solches Schneidwerk umfasst im Allgemeinen einen Trägerrahmen mit einer Bodenplatte, an deren Vorderkante ein Messer in Querrichtung oszillierend beweglich montiert ist. Indem Schneidkanten dieses beweglichen Messers an Schneidkanten eines Gegenmessers vorbeigleiten, wird Erntegut, das durch eine Vorwärtsbewegung der Erntemaschine zwischen die Schneidkanten gelangt, geschnitten und fällt auf die Bodenplatte, wo es von einer Einzugwalze erfasst und weiterbefördert wird. Das Messer wird in jeder Periode seiner oszillierenden Bewegung zweimal beschleunigt und wieder abgebremst. Wenn das Messer starr an einen Antriebsmotor gekoppelt ist, wird dieser jeweils beim Beschleunigen des Messers belastet, während das Messer in den Verzögerungsphasen seiner Bewegung seinerseits den Motor antreibt. Um die damit verbundene Belastung des Motors zu verringern, wurde in DE 10 2010 011 123 A1 ein Schneidwerk vorgeschlagen, bei dem in einem drehantreibbaren Antriebsstrang für das Messer zwischen einem antriebsseitigen Element und einem abtriebsseitigen Element ein torsionselastisches Element eingefügt ist. Dieses bekannte torsionselastische Element kann durch eine Hülse aus Elastomermaterial gebildet sein, deren innere und äußere Umfangsflächen konturiert sind, um formschlüssig mit einem antriebsseitigen bzw. einem abtriebsseitigen Element des Antriebsstrangs zusammenzuwirken. Um eine für praktische Anforderungen ausreichende Drehbeweglichkeit von antriebsseitigem und abtriebsseitigem Element gegeneinander zu gewährleisten, muss das Material der Hülse sehr weich und nachgiebig sein, und es besteht die Gefahr, dass das torsionselastische Element sich durch an ihm geleistete Walkarbeit übermäßig erwärmt und Schaden nimmt bzw. aufgrund chemischer Alterungsreaktionen versprödet. Dieselbe Gefahr besteht, wenn gemäß einer anderen vorbekannten Ausgestaltung das torsionselastische Element Gummipuffer umfasst, die bei einer Drehung von antriebsseitigem und abtriebsseitigem Element gegeneinander zwischen Schaufeln des antriebsseitigen und des abtriebsseitigen Elements eingeklemmt und gestaucht werden.

Die Druckschriften US 2007/0144280 A1 und GB 1 469 633 offenbaren verschiedene Ausführungsformen von Antriebskupplungen mit Schraubenfedern, die eine Trennung einer inneren und einer äußeren Kupplungsscheibe bewirken. Zudem offenbaren die Druckschriften US 1,210,943 und US 2,731,256 verschiedene Ausführungsformen torsionsdämpfender Zahnradverbindungen mit Spiralfedern.

Aufgabe der vorliegenden Erfindung ist, ein Schneidwerk für eine Erntemaschine zu schaffen, bei dem ein in dem Antriebsstrang des Messers eingefügtes torsionselastisches Element dauerhaft belastbar und nicht überhitzungsgefährdet ist.

Dafür wird ein Schneidwerk für eine Erntemaschine, geschaffen, mit einem Trägerrahmen, wenigstens einem in dem Trägerrahmen verschiebbaren Messer, einem drehantreibbaren Antriebsstrang, der zwischen einem antriebsseitigen Element und einem abtriebsseitigen Element ein torsionselastisches Element aufweist, und einem mit dem abtriebsseitigen Element verbundenen Exzentermechanismus zum Umsetzen einer Drehung des Antriebsstrangs in eine oszillierende Bewegung des ersten Messers das torsionselastische Element wenigstens eine Schraubenfeder umfasst. Die Schraubenfeder hat eine im Verhältnis zu ihrem Volumen große Oberfläche, über die eventuell durch ständiges Verformen der Feder erzeugte Wärme effizient abgegeben werden kann. Darüber hinaus kann die Schraubenfeder aus einem gegen erhöhte Temperaturen und chemische Alterung unempfindlichen, insbesondere metallischen Werkstoff gefertigt sein.

Das antriebsseitige Element und das abtriebsseitige Element können eine gemeinsame Drehachse haben.

Um diese Drehachse sind vorzugsweise mehrere der Schraubenfedern verteilt. Um eine ausreichende Drehbewegungsfreiheit von antriebs- und abtriebsseitigem Element gegeneinander zu gewährleisten, sollte die Zahl der - vorzugsweise in einer gleichen Ebene - angeordneten Schraubenfedern nicht zu groß sein; vorzugsweise sind genau drei Schraubenfedern vorgesehen.

Das Schneidwerk zeichnet sich dadurch aus, dass das torsionselastische Element zum Verformen der Feder ein mit dem antriebsseitigen Element drehfest verbundenes Fingerpaar und ein mit dem abtriebsseitigen Element drehfest verbundenes Fingerpaar aufweist, wobei je ein Finger des antriebsseitigen und des abtriebsseitigen Fingerpaars einem gleichen Ende wenigstens einer der Schraubenfedern gegenüber liegt. So kann jeder Finger, wenn er über den jeweils benachbarten Finger des anderen Fingerpaars hinaus gegen die Schraubenfeder vorrückt, diese elastisch stauchen.

Das antriebsseitige Fingerpaar kann im Bezug auf die gemeinsame Drehachse gegen das abtriebsseitige Fingerpaar in Richtung der gemeinsamen Drehachse versetzt sein, um den Zusammenbau des elastischen Elements zu vereinfachen.

Wenn mehrere Schraubenfedern vorhanden sind, hat vorzugsweise jeder Finger zwei Kontaktflächen, die jeweils verschiedenen Schraubenfedern zugewandt sind.

Die Finger eines Fingerpaars sind vorzugsweise aus einer Gleichgewichtsstellung, in der Kontaktflächen beider einem gleichen Ende einer der Schraubenfedern gegenüberliegenden Finger verschiedener Fingerpaare das Ende dieser Schraubenfeder berühren, in entgegengesetzte Richtungen bewegbar. So kann sowohl ein antriebsseitiger als auch ein abtriebsseitiger Finger gegen dasselbe Ende der Schraubenfeder vorrücken und die Schraubenfeder stauchen.

Ein kompakter Aufbau ergibt sich, wenn von antriebsseitigem Element und abtriebsseitigem Element des Antriebsstrangs das eine ein Wellenabschnitt und das andere ein mit dem Wellenabschnitt drehbares Zahnrad ist.

Die wenigstens eine Schraubenfeder kann platzsparend in einem Hohlraum des Zahnrades untergebracht sein.

Die Finger des mit dem Zahnrad drehfest verbundenen Fingerpaars können von einem den Wellenabschnitt drehbar umgebenden Ring radial nach außen abstehen und dabei am Zahnrad formschlüssig verankert sein.

Der Wellenabschnitt und das Zahnrad können Vorsprünge tragen, die bei gestauchter Schraubenfeder miteinander in Kontakt kommen, um die Schwenkbewegungsfreiheit des Zahnrades gegenüber dem Wellenabschnitt zu begrenzen und einer Überbeanspruchung der Schraubenfeder vorzubeugen.

Die Finger des mit dem Zahnrad drehfest verbundenen Fingerpaars können von einem den Wellenabschnitt drehbar umgebenden Ring radial nach außen abstehen und dabei am Zahnrad formschlüssig verankert sein.
der Wellenabschnitt und das Zahnrad können Vorsprünge tragen, die bei gestauchter Schraubenfeder miteinander in Kontakt kommen, um die Schwenkbewegungsfreiheit des Zahnrades gegenüber dem Wellenabschnitt zu begrenzen und einer Überbeanspruchung der Schraubenfeder vorzubeugen.

Die wenigstens eine Schraubenfeder sollte mit einem Ölbad in Kontakt stehen, um Reibverschleiß zu minimieren, wenn die Schraubenfeder in gleitendem Kontakt mit dem antriebsseitigen und/oder abtriebsseitigen Element verformt wird.

Wenn die Schraubenfeder wie oben erwähnt in einem Hohlraum des Zahnrads untergebracht ist, könnte auch das Ölbad in diesem Hohlraum eingeschlossen sein. Vorzugsweise ist das Ölbad außerhalb des Zahnrades, insbesondere in einem das Zahnrad umschließenden Gehäuse, untergebracht, so dass das Zahnrad wenigstens teilweise in das Ölbad eintaucht und Öl des Ölbades frei in den Hohlraum des Zahnrades eindringen und daraus abfließen kann.

Weitere Merkmale und Vorteile der Erfindung ergeben sich aus der nachfolgenden Beschreibung von Ausführungsbeispielen unter Bezugnahme auf die beigefügten Figuren. Es zeigen:
- Fig. 1: eine schematische Draufsicht auf ein erfindungsgemäßes Schneidwerk;
- Fig. 2: eine Getriebebaugruppe des Schneidwerks aus Fig. 1;
- Fig. 3: eine schematische Darstellung eines Exzenters des Schneidwerks aus Fig. 1;
- Fig. 4: eine perspektivische Ansicht eines torsionselastischen Elements;
- Fig. 5: das torsionselastische Element ohne das es umgebende Zahnrad in einer Neutralstellung;
- Fig. 6: eine zu Fig. 5 analoge Ansicht des torsionselastischen Elements in einer ausgelenkten Stellung;
- Fig. 7: einen axialen Schnitt durch das torsionselastische Element;
- Fig. 8: eine zu Fig. 5 analoge Ansicht des torsionselastischen Elements gemäß einer zweiten Ausgestaltung; und
- Fig. 9: eine zu Fig. 6 analoge Ansicht gemäß der zweiten Ausgestaltung.

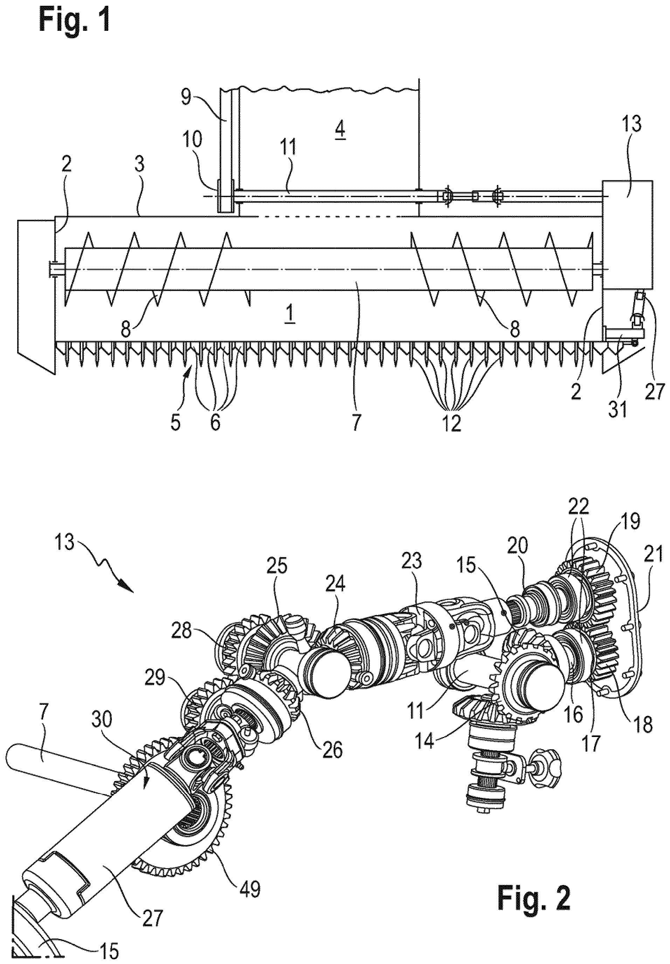

Fig. 1 ist eine Draufsicht auf ein Schneidwerk zur Verwendung an einem Mähdrescher oder einer anderen selbstfahrenden Erntemaschine. Ein Trägerrahmen des Schneidwerks umfasst eine im Wesentlichen horizontale Bodenplatte 1, vertikale Seitenwangen 2 an einem linken und rechten Rand der Bodenplatte 1 sowie eine Rückwand 3, die Hinterkanten der Bodenplatte 1 und der Seitenwangen 2 verbindet und eine mittige Öffnung aufweist, an der ein Schrägförderer 4 anschließt. Ein Messer 5 mit einer Mehrzahl von in Draufsicht dreieckigen Zähnen 6 ist in einer Schiene am vorderen Rand der Bodenplatte 1 entlang dieses Randes horizontal verschiebbar montiert. An demselben Rand ortsfest montierte, nach vorn vorspringende Finger 12 haben nach hinten offene Schlitze, in die die Zähne in Querrichtung bewegbar eingreifen. Indem schräge Kanten der Zähne 6 über seitliche Kanten der Finger 12 herstreichen, wird in ihre Reichweite gelangendes halmartiges Erntegut gekappt und fällt auf die Bodenplatte 1.

Eine zwischen den Seitenwangen 2 drehbar montierte Einzugswalze 7 ist mit gegenläufigen Schnecken 8 besetzt, die das abgeschnittene Erntegut von den Seiten der Bodenplatte 1 zur Mitte schieben und dem Schrägförderer 4 zuführen.

Ein gemeinsamer Antriebsstrang des Messers 5 und der Einzugwalze 7 umfasst hier einen von einem Motor der Erntemaschine angetriebenen Riemen 9 und eine Welle 11, die eine von dem Riemen 9 umschlungene Riemenscheibe 10 trägt und sich im Wesentlichen parallel zur Rückwand 3 bis in eine Getriebebaugruppe 13 an der rechten Seitenwange 2 des Schneidwerks erstreckt.

Fig. 2 zeigt einzelne Komponenten der Getriebebaugruppe 13 in einer perspektivischen Ansicht. Die Welle 11 trägt ein Kegelrad 14, das mit einem komplementären Kegelrad 15 an einer kurzen, sich in etwa in Fahrtrichtung erstreckenden Welle 16 kämmt. Mit der Welle 16 ist ein Zahnrad 18 über ein in seinem Inneren verborgenes, später im Detail beschriebenes torsionselastisches Element 17 ein Zahnrad 18 verbunden. Das Zahnrad 18 kämmt seinerseits mit einem Zahnrad 19 an einer Welle 20.

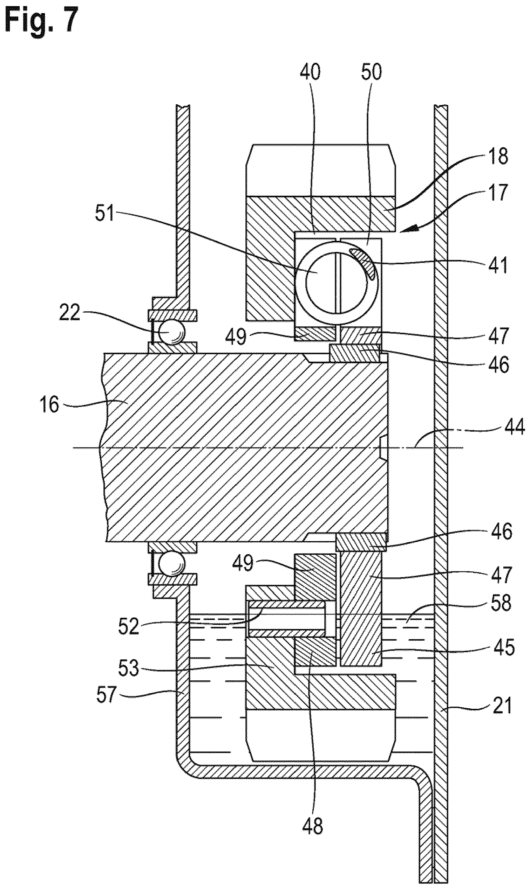

Die Zahnräder 18, 19 sind in einem Gehäuse untergebracht, von dem in Fig. 2 eine Rückwandplatte 21 gezeigt ist. Eine vordere Schale 57 des Gehäuses, durch die sich die Wellen 16, 20 erstrecken, ist in Fig. 7 gezeigt; in Fig. 2 ist sie weggelassen, um die Zahnräder 18, 19 zeigen zu können; zu sehen sind lediglich in Wandöffnungen der vorderen Schale 57 aufgenommene, die Wellen 16, 20 umgebende Wälzlager 22.

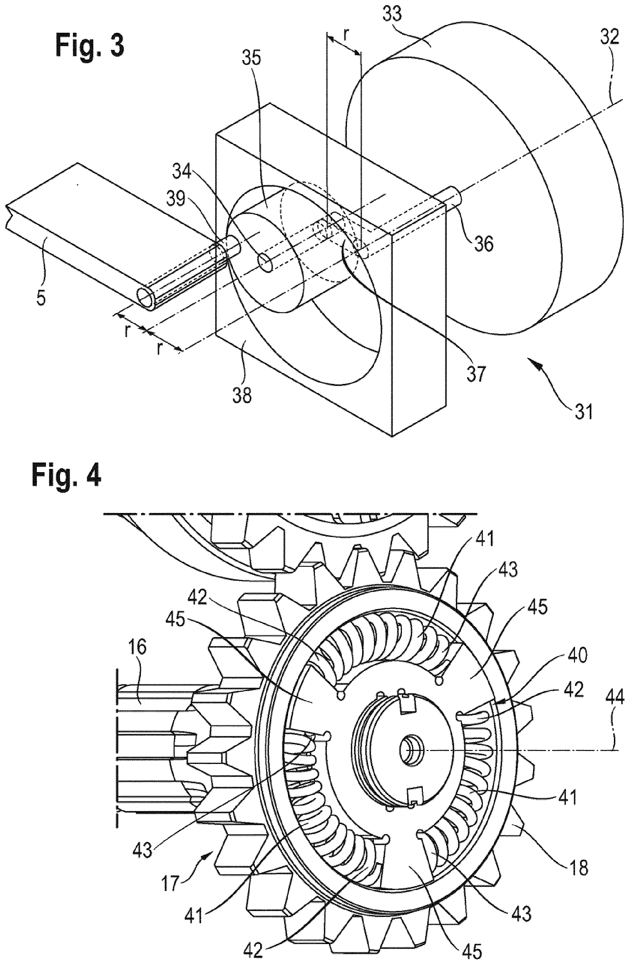

Die Welle 20 ist als Gelenkwelle, mit einem Kreuzgelenk 23, ausgebildet, und trägt an ihrem vorderen Ende ein Kegelrad 24. Ein Kegelrad 25 kämmt gleichzeitig mit dem Kegelrad 24 und einem weiteren Kegelrad 26, das über eine weitere Gelenkwelle 27 und einen in Fig. 3 gezeigten Exzentermechanismus 31 das Messer 5 antreibt. Des weiteren ist das Kegelrad 25 über ein Getriebe aus Zahnrädern 28, 29, 30 an eine Welle der Einzugswalze 7 gekoppelt.

Einer nicht gezeichneten Ausgestaltung zu Folge können an der Vorderkante der Bodenplatte 1 zwei Messer 5 vorgesehen sein, von denen sich das eine über die rechte, das andere über die linke Hälfte der Vorderkante erstreckt. Um das linke Messer 5 anzutreiben, ist an der linken Seitenwange 2 ein zweiter Exzentermechanismus angeordnet, der über die Welle der Einzugwalze 7 und ein zu den Zahnrädern 30, 29, 28, den Kegelrädern 25, 26 und der Gelenkwelle 27 spiegelbildliches Getriebe angetrieben ist.

Fig. 3 zeigt schematisch ein Beispiel für den Exzentermechanismus 31, der am Ende der Gelenkwelle 27 angeordnet ist, um das Messer 5 anzutreiben. Ein Schwungrad 33 bildet einen Abschluss der in Fig. 3 nicht dargestellten Gelenkwelle 27. Die Achse der Gelenkwelle 27 ist in Fig. 3 als strichpunktierte Linie 32 eingezeichnet. Das Schwungrad 33 trägt, parallel zur Achse 32 und um einen Abstand r gegen diese versetzt, eine Welle 34, auf der ein Zahnrad 35 drehbar gehalten ist. In Fig. 3 sind als Verbindung zwischen der Welle 34 und dem Schwungrad 33 ein die Gelenkwelle 27 verlängernder Stift 36 und ein radial ausgerichteter Arm 37 gezeigt; in der Praxis ist die Welle 34 eher unmittelbar am Schwungrad 33 verankert, und einander zugewandte Stirnseiten des Schwungrades 33 und des Zahnrades 35 sind allenfalls durch einen schmalen Spalt getrennt.

Das Zahnrad 35 kämmt mit einem an dem Trägerrahmen ortsfesten Hohlrad 38, wobei die Wälzkreisradien des Zahnrades 35 und des Hohlrades 38 r bzw. 2r betragen. Das Zahnrad 35 trägt einen Stift 39, der drehbar in ein Kopfende des Messers 5 eingreift. Die Achse des Stifts 39 ist gegen diejenige des Stifts 36 wieder um den Abstand r versetzt. Der Eingriff in das Hohlrad 38 zwingt das Zahnrad 35 zu einer Drehung mit zur Drehung des Schwungrades 33 entgegengesetztem Drehsinn. In Folge dieser Drehung bewegt sich der Stift 39, ohne einer weiteren Führung durch Teile außerhalb des Exzentermechanismus 31 zu bedürfen, auf einer horizontalen Ebene hin und her.

Fig. 4 zeigt das oben mit Bezug auf Fig. 1 erwähnte torsionselastische Element 17 in einer perspektivischen Ansicht, gesehen von der Seite der (in Fig. 4 weggelassenen) Bodenplatte 21 her. In einem Hohlraum 40 des Zahnrades 18 sind, gleichmäßig um die Welle 16 verteilt, drei Schraubenfedern 41 untergebracht. Die Längsachsen der Schraubenfedern 41 sind kreisbogenförmig um eine gemeinsame Drehachse von Welle 16 und Zahnrad 18 gekrümmt, so dass die zwei Enden der Federn 41 bezogen auf die (in Fig. 4 durch Pfeile angezeigte) Drehrichtung von Zahnrad 18 und Welle 16 jeweils als vorderes Ende 42 bzw. hinteres Ende 43 aufgefasst werden können.

Die Enden 42, 43 der Schraubenfedern 41 liegen jeweils an Kontaktflächen von Fingern 45 an, die von einem an der Welle 16 durch Splinte 46 (Fig. 7) drehfest gesicherten Ring 47 radial abstehen.

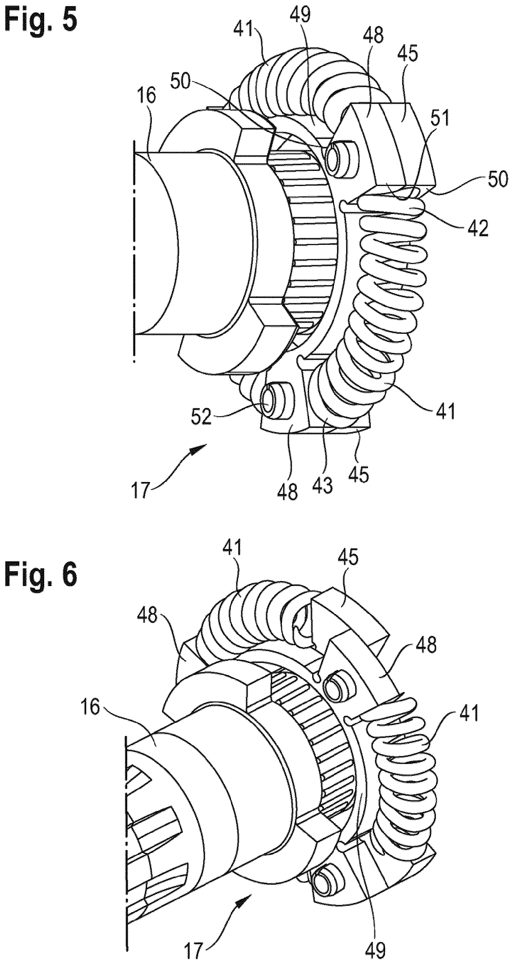

Fig. 5 zeigt das torsionselastische Element 17 der Fig. 4 aus einer anderen Perspektive und ohne das es umgebende Zahnrad 18. Wie man hier sieht, ist die Ausdehnung der Finger 45 in axialer Richtung der Welle 16 kleiner als der Durchmesser der Schraubenfedern 41, so dass deren Enden 42, 43 sich nicht nur an den Fingern 45 des an der Welle 16 drehfesten Rings 47 abstützen, sondern auch an Fingern 48, die von einem Ring 49, der sich spielhaltig und drehbar um die Welle 16 erstreckt, radial nach außen abstehen. Jede Feder 41 ist somit zwischen einem Paar von Fingern 45 und einem Paar von Fingern 48 gehalten, wobei in der in Fig. 5 gezeigten Neutralstellung jedes Ende 42 bzw. 43 Kontaktflächen eines Fingers 45 und eines Fingers 48 gleichzeitig berührt. Jeder Finger 45, 48 hat an zwei einander gegenüberliegenden Seiten Kontaktflächen 50 bzw. 51, an denen jeweils ein vorderes Ende 42 einer Feder 41 bzw. ein hinteres Ende 43 einer anderen Feder 41 anliegt.

In axialen Bohrungen der Finger 48 sind Spreizhülsen 52 aufgenommen, die die Finger 48 drehfest mit dem Zahnrad 18 verbinden. Dieses Zahnrad 18 hat, wie in dem axialen Schnitt der Fig. 7 zu erkennen, eine den Hohlraum 40 in axialer Richtung begrenzende Seitenwand 53, in der zu den Bohrungen der Finger 48 komplementäre, die Spreizhülsen 52 aufnehmende Bohrungen gebildet sind.

An seiner entgegengesetzten, der Rückwandplatte 21 zugewandten Seite ist der Hohlraum 40 offen, so das Öl eines sich im Unterteil des von Rückwandplatte 21 und vorderer Schale 57 gebildeten Gehäuses zusammenlaufenden Ölbads 58 in den Hohlraum 40 eindringen und die Federn 41 darin schmieren und falls erforderlich kühlen kann.

Im unbelasteten Zustand halten die Schraubenfedern 41 die Finger 45, 48 in der in Fig. 5 gezeigten Neutralstellung, in der jedes Ende 42, 43 jeder Feder 41 gleichzeitig eine Kontaktfläche 50 an einem an der Welle 16 drehfesten Finger 45 und eine Kontaktfläche 51 an einem am Zahnrad 18 drehfesten Finger 48 berührt. Jede Verdrehung der Finger 45, 48 gegeneinander, egal in welche Richtung, führt zu einer Stauchung der Schraubenfedern 41. Wenn man annimmt, dass die Welle 16 im Gegenuhrzeigersinn drehangetrieben ist, dann zeigt Fig. 6 ein Voreilen der an der Welle 16 drehfesten Finger 45 gegenüber den mit dem Zahnrad 18 verbundenen Fingern 48, das sich beispielsweise ergibt, wenn das Messer 5 über die Welle 16 beschleunigt wird. Je stärker der Winkelversatz zwischen den Fingern 45, 48, um so stärker gestaucht sind die Schraubenfedern 41, und um so größer ist das von der Welle 16 auf das Zahnrad 18 übertragene Drehmoment und folglich auch die Beschleunigung des Messers 5. In einer Phase verzögerter Bewegung des Messers 5 sind es die über das Zahnrad 18 vom Messer 5 angetriebenen Finger 48, die den Fingern 45 voreilen und dabei die Federn 41 stauchen.

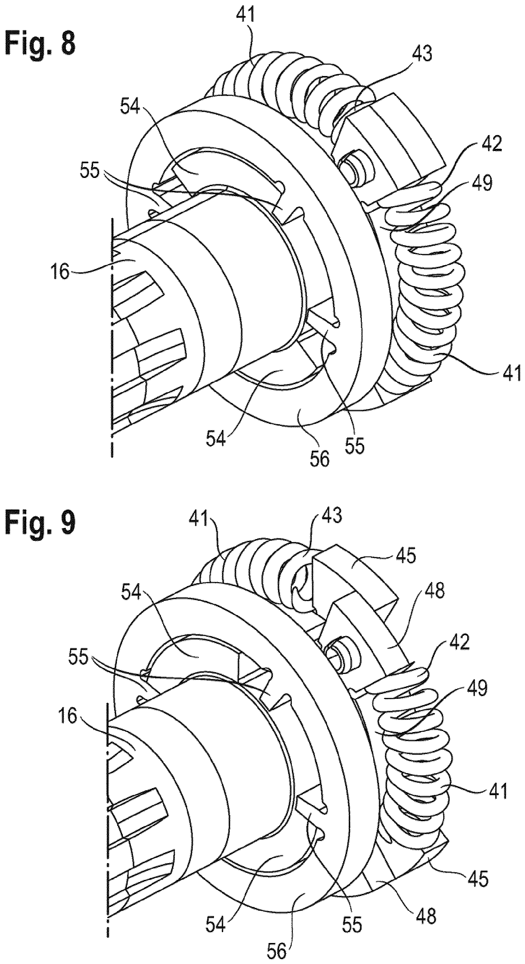

Die Schwenkbewegungsfreiheit der Welle 16 und des Zahnrads 18 gegeneinander ist grundsätzlich dadurch eingeschränkt, dass die Federn 41 nicht weiter gestaucht werden können, als bis ihre Windungen aneinanderstoßen. Um zu vermeiden, dass die Federn 41 in einer solchen Situation einer Scherbelastung zwischen den axial gegeneinander versetzten, an ihren Enden 42, 43 anliegenden Kontaktflächen 50, 51 ausgesetzt sind, können die Welle 16 und das Zahnrad 18 mit zusätzlich die Schwenkbewegungsfreiheit einschränkenden Vorsprüngen versehen sein. Bei einer in den Fig. 8 und 9 gezeigten Ausgestaltung ist eine Gruppe von solchen Vorsprüngen 54 zum einen durch kreisbogenförmige Rippen an der Welle 16 gebildet, andere Vorsprünge 55 sind hier radial nach innen abstehende Finger an einem Ring 56, der an der Seitenwand 53 des (in Fig. 8 nicht dargestellten) Zahnrades 18 gegenüber von dem Ring 49 befestigt ist.

In der Stellung der Fig. 8 sind die Schraubenfedern 41 entspannt, die Finger 45, 48 fluchten miteinander, und es wird kein Drehmoment übertragen. Die Finger 55 berühren Enden der Rippen 54 so, dass eine Drehung der Welle 16 gegen die mit dem Zahnrad 18 verbundenen Ringe 49, 56 im Gegenuhrzeigersinn möglich ist, nicht aber im Uhrzeigersinn. Wenn die Welle 16 im Gegenuhrzeigersinn angetrieben und Drehmoment zum Zahnrad 18 übertragen wird, dann können die Finger 48 den Fingern 45 voreilen und dabei die Federn 41 stauchen, bis die Finger 55 in der in Fig. 9 gezeigten Stellung an entgegengesetzten Enden der Rippen 54 anstoßen.

### Bezugszeichen

- 1: Bodenplatte
- 2: Seitenwange
- 3: Rückwand
- 4: Schrägförderer
- 5: Messer
- 6: Zahn
- 7: Einzugswalze
- 8: Schnecke
- 9: Riemen
- 10: Riemenscheibe
- 11: Welle
- 12: Finger
- 13: Getriebebaugruppe
- 14: Kegelrad
- 15: Kegelrad
- 16: Welle
- 17: torsionselastisches Element
- 18: Zahnrad
- 19: Zahnrad
- 20: Welle
- 21: Rückwandplatte
- 22: Wälzlager
- 23: Kreuzgelenk
- 24: Kegelrad
- 25: Kegelrad
- 26: Kegelrad
- 27: Gelenkwelle
- 28: Zahnrad
- 29: Zahnrad
- 30: Zahnrad
- 31: Exzentermechanismus
- 32: Achse
- 33: Schwungrad
- 34: Welle
- 35: Zahnrad
- 36: Stift
- 37: Arm
- 38: Hohlrad
- 39: Stift
- 40: Hohlraum
- 41: Schraubenfeder
- 42: vorderes Ende
- 43: hinteres Ende
- 44: Achse
- 45: Finger
- 46: Splint
- 47: Ring
- 48: Finger
- 49: Ring
- 50: Kontaktfläche
- 51: Kontaktfläche
- 52: Spreizhülse
- 53: Seitenwand
- 54: Vorsprung
- 55: Vorsprung
- 56: Ring
- 57: vordere Schale

## Patentansprüche

1. Schneidwerk für eine Erntemaschine, mit einem Trägerrahmen, wenigstens einem in dem Trägerrahmen verschiebbaren Messer (5), einem drehantreibbaren Antriebsstrang, der zwischen einem antriebsseitigen Element und einem abtriebsseitigen Element ein torsionselastisches Element (17) aufweist, und einem mit dem abtriebsseitigen Element verbundenen Exzentermechanismus (31) zum Umsetzen einer Drehung des Antriebsstrangs in eine oszillierende Bewegung des Messers (5), wobei das antriebsseitige Element drehfest verbundene Finger (45) und das abtriebsseitige Element drehfest verbundene Finger (48) aufweisen, **dadurch gekennzeichnet, dass** das torsionselastische Element (17) wenigstens eine Schraubenfeder (41) umfasst, dass das torsionselastische Element (17) ein mit dem antriebsseitigen Element drehfest verbundenes Paar von Fingern (45) und ein mit dem abtriebsseitigen Element drehfest verbundenes Paar von Fingern (48) aufweist und dass je ein Finger (45, 48) des antriebsseitigen und des abtriebsseitigen Fingerpaars einem gleichen Ende (42, 43) der wenigstens einen Schraubenfeder (41) gegenüberliegt.

2. Schneidwerk nach Anspruch 1, **dadurch gekennzeichnet, dass** das antriebsseitige Element und das abtriebsseitige Element eine gemeinsame Drehachse (44) haben.

3. Schneidwerk nach Anspruch 2, **dadurch gekennzeichnet, dass** mehrere Schraubenfedern (41), insbesondere drei Schraubenfedern (41), um die gemeinsame Drehachse (44) herum verteilt sind.

4. Schneidwerk nach einem der vorherigen Ansprüche, **dadurch gekennzeichnet, dass** das antriebsseitige Paar von Fingern (45) gegen das abtriebsseitige Paar von Fingern (48) in axialer Richtung in Bezug auf die gemeinsame Drehachse (44) des antriebsseitigen und des abtriebsseitigen Elements versetzt ist.

5. Schneidwerk nach einem der vorherigen Ansprüche, **dadurch gekennzeichnet, dass** jeder Finger (45, 48) zwei Kontaktflächen (50, 51) hat, die jeweils verschiedenen Schraubenfedern (41) zugewandt sind.

6. Schneidwerk nach einem der vorherigen Ansprüche, **dadurch gekennzeichnet, dass** die Finger (45, 48) verschiedener Fingerpaare aus einer Neutralstellung, in der Kontaktflächen (50, 51) beider Finger (45, 48) ein gleiches Ende (42) einer Feder (41) berühren, in entgegengesetzte Richtungen bewegbar sind.

7. Schneidwerk nach einem der vorhergehenden Ansprüche, **dadurch gekennzeichnet, dass** von dem antriebsseitigen Element und dem abtriebsseitigen Element das eine eine Welle (16) und das andere ein mit der Welle (16) drehbares Zahnrad (18) ist.

8. Schneidwerk nach Anspruch 7, **dadurch gekennzeichnet, dass** die wenigstens eine Schraubenfeder (41) in einem Hohlraum (40) des Zahnrades (18) untergebracht ist.

9. Schneidwerk nach Anspruch 8, **dadurch gekennzeichnet, dass** die Finger (48) des mit dem Zahnrad (18) drehfest verbundenen Fingerpaars von einem die Wellen (16) drehbar umgebenden Ring (49) radial nach außen abstehen und am Zahnrad (18) formschlüssig verankert sind.

10. Schneidwerk nach Anspruch 9, **dadurch gekennzeichnet, dass** in Bohrungen des Zahnrades (18) und der Finger (48) eingreifende Spreizhülsen (52) die Finger (48) mit dem Zahnrad (18) verbinden.

11. Schneidwerk nach einem der Ansprüche 7 bis 10, **dadurch gekennzeichnet, dass** die Welle (16) und das Zahnrad (18) Vorsprünge (54, 55) tragen, die bei gestauchter Schraubenfeder (41) miteinander in Kontakt kommen.

12. Schneidwerk nach einem der vorhergehenden Ansprüche, **dadurch gekennzeichnet, dass** die wenigstens eine Schraubenfeder (41) mit einem Ölbad (58) in Kontakt steht.

13. Schneidwerk nach Anspruch 12, soweit auf Anspruch 9 rückbezogen, **dadurch gekennzeichnet, dass** das Zahnrad (18) wenigstens teilweise in das Ölbad (58) eintaucht und der Hohlraum (40) des Zahnrades (18) mit dem Ölbad (58) kommuniziert.

## Claims

1. A header for a harvester comprising a carrier frame, at least one blade (5) displaceable in the carrier frame, a drive train which is drivable in rotation and which has a torsionally elastic element (17) between a drive side element and a driven side element, and an eccentric mechanism (31) connected to the driven side element for conversion of a rotary movement of the drive train into an oscillating movement of the blade (5), wherein the drive side element has non-rotatably connected fingers (45) and the driven side element has non-rotatably connected fingers (48), **characterised in that** the torsionally elastic element (17) includes at least one coil spring (41), that the torsionally elastic element (17) has a pair of fingers (45), that is non-rotatably connected to the drive side element, and a pair of fingers (48), that is non-rotatably connected to the driven side element, and that a respective finger (45, 48) of the drive side and the driven side pairs of fingers is opposite an identical end (42, 43) of the at least one coil spring (41).

2. A header according to claim 1 **characterised in that** the drive side element and the driven side element have a common axis of rotation (44).

3. A header according to claim 2 **characterised in that** a plurality of coil springs (41), in particular three coil springs (41), are distributed around the common axis of rotation (44).

4. A header according to one of the preceding claims **characterised in that** the drive side pair of fingers (45) is displaced relative to the driven side pair of fingers (48) in the axial direction in relation to the common axis of rotation (44) of the drive side and the driven side element.

5. A header according to one of the preceding claims **characterised in that** each finger (45, 48) has two contact surfaces (50, 51) which respectively face towards different coil springs (41).

6. A header according to one of the preceding claims **characterised in that** the fingers (45, 48) of various pairs of fingers are moveable in opposite directions from a neutral position in which contact surfaces (50, 51) of both fingers (45, 48) are in contact with an identical end (42) of a spring (41).

7. A header according to one of the preceding claims **characterised in that** of the drive side element and the driven side element the one is a shaft (16) and the other is a gear (18) rotatable with the shaft (16).

8. A header according to claim 7 **characterised in that** the at least one coil spring (41) is disposed in a cavity (40) in the gear (18).

9. A header according to claim 8 **characterised in that** the fingers (48) of the pair of fingers non-rotatably connected to the gear (18) project radially outwardly from a ring (49) rotatably surrounding the shafts (16) and are anchored to the gear (18) in positively locking relationship.

10. A header according to claim 9 **characterised in that** spreader sleeves (52) engaging into bores in the gear (18) and the fingers (48) connect the fingers (48) to the gear (18).

11. A header according to one of claims 7 to 10 **characterised in that** the shaft (16) and the gear (18) carry projections (54, 55) which come into contact with each other when the coil spring (41) is compressed.

12. A header according to one of the preceding claims **characterised in that** the at least one coil spring (41) is in contact with an oil bath (58).

13. A header according to claim 12 when appended to claim 9 **characterised in that** the gear (18) at least partially dips into the oil bath (58) and the cavity (40) in the gear (18) communicates with the oil bath (58).

## Revendications

1. Tablier de coupe pour une machine de récolte, comprenant un cadre porteur, au moins une lame (5) coulissant dans le cadre porteur, une chaîne de transmission entraînée en rotation qui comporte un élément à élasticité torsionnelle (17) entre un élément côté menant et un élément côté mené, et un mécanisme à excentrique (31) relié à l'élément côté mené pour convertir une rotation de la chaîne de transmission en un mouvement oscillant de la lame (5), l'élément côté menant comportant des doigts solidaires en rotation (45) et l'élément côté mené comportant des doigts solidaires en rotation (48), **caractérisé en ce que** l'élément à élasticité torsionnelle (17) comporte au moins un ressort hélicoïdal (41), **en ce que** l'élément à élasticité torsionnelle (17) comprend une paire de doigts (45) solidaire en rotation de l'élément côté menant et une paire de doigts (48) solidaire en rotation de l'élément côté mené, et **en ce qu'**à chaque fois un doigt (45, 48) de la paire de doigts côté menant et de la paire de doigts côté mené fait face à une même extrémité (42, 43) du au moins un ressort hélicoïdal (41).

2. Tablier de coupe selon la revendication 1, **caractérisé en ce que** l'élément côté menant et l'élément côté mené ont un axe de rotation commun (44).

3. Tablier de coupe selon la revendication 2, **caractérisé en ce que** plusieurs ressorts hélicoïdaux (41), en particulier trois ressorts hélicoïdaux (41), sont répartis autour de l'axe de rotation commun (44).

4. Tablier de coupe selon une des revendications précédentes, **caractérisé en ce que**, par rapport à la paire de doigts côté mené (48), la paire de doigts côté menant (45) est décalée dans la direction axiale par rapport à l'axe de rotation commun (44) de l'élément côté menant et de l'élément côté mené.

5. Tablier de coupe selon une des revendications précédentes, **caractérisé en ce que** chaque doigt (45, 48) a deux surfaces de contact (50, 51) qui sont chacune tournées vers un ressort hélicoïdal (41) différent.

6. Tablier de coupe selon une des revendications précédentes, **caractérisé en ce que** les doigts (45, 48) de paires de doigts différents sont déplaçables dans des directions opposées à partir d'une position neutre dans laquelle des surfaces de contact (50, 51) des deux doigts (45, 48) touchent une même extrémité (42) d'un ressort (41).

7. Tablier de coupe selon une des revendications précédentes, **caractérisé en ce que**, parmi l'élément côté menant et l'élément côté mené, l'un est un arbre (16) et l'autre une roue dentée (18) tournant avec l'arbre (16).

8. Tablier de coupe selon la revendication 7, **caractérisé en ce que** le au moins un ressort hélicoïdal (41) est logé dans une cavité (40) de la roue dentée (18).

9. Tablier de coupe selon la revendication 8, **caractérisé en ce que** les doigts (48) de la paire de doigts solidaire en rotation de la roue dentée (18) font saillie radialement vers l'extérieur à partir d'un anneau (49) entourant en rotation les arbres (16) et sont assujettis à la roue dentée (18) par conjugaison de formes.

10. Tablier de coupe selon la revendication 9, **caractérisé en ce que** des coquilles d'expansion (52) pénétrant dans des perçages de la roue dentée (18) et des doigts (48) relient les doigts (48) à la roue dentée (18).

11. Tablier de coupe selon une des revendications 7 à 10, **caractérisé en ce que** l'arbre (16) et la roue dentée (18) portent des saillies (54, 55) qui, lorsque le ressort hélicoïdal (41) est comprimé, viennent en contact l'une avec l'autre.

12. Tablier de coupe selon une des revendications précédentes, **caractérisé en ce que** le au moins un ressort hélicoïdal (41) est en contact avec un bain d'huile (58).

13. Tablier de coupe selon la revendication 12, pour autant que rattachée à la revendication 9, **caractérisé en ce que** la roue dentée (18) plonge au moins partiellement dans le bain d'huile (58), et la cavité (40) de la roue dentée (18) communique avec le bain d'huile (58).
